# DEMANDE DE BREVET EUROPEEN

(11) **EP 1 246 091 A1**
(43) Date de publication de la demande: **02.10.2002**
(21) Numéro de dépôt: 02290671.3
(22) Date de dépôt: 18.03.2002
(51) Int. Cl.: G06F 17/40, G06F 17/60

(54) **Dispositif et procédé d'assistance documentaire pour un opérateur d'aéronef, en particulier un pilote de l'aéronef**

(30) Priorité: 27.03.2001 FR 0104085
(71) Demandeur: AIRBUS FRANCE, 31060 Toulouse (FR)
(72) Inventeur: Salvado, Felipe, 31100 Toulouse (FR); Populus, Fr-d-rique, 31470 Fontenilles (FR)
(74) Mandataire: Hauer, Bernard

(57) **Abrégé**

- Le dispositif d'assistance documentaire (1) comporte des sources de données informatiques (S1 à Sn, B1 à Bp) relatives audit aéronef, à des éléments de ce dernier, ainsi qu'à l'environnement extérieur, un moyen d'interrogation (2) susceptible d'être activé par un opérateur pour engendrer une demande d'informations relatives à l'exécution d'au moins une tâche particulière, un moyen de présentation d'informations (5), et une unité centrale (6) recherchant dans les sources de données (S1 à Sn, B1 à Bp), en réponse à la génération d'une demande d'informations par le moyen d'interrogation (2), des données relatives à l'exécution de la tâche, rassemblant ces données et les transmettant, sous forme d'informations, au moyen de présentation d'informations (5) en vue de leur présentation à l'opérateur.

## Description

La présente invention concerne un dispositif et un procédé d'assistance documentaire d'au moins un opérateur d'un aéronef, en particulier un pilote de l'aéronef, pour assister ledit opérateur dans l'exécution d'au moins l'une d'une pluralité de tâches différentes.

Dans le cadre de la présente invention, il peut s'agir de tâches devant être accomplies avant, pendant ou après le vol de l'aéronef. Ces tâches peuvent être :
- soit des tâches programmées, telles que l'établissement d'un plan de vol ou la surveillance du fuel pendant le vol par exemple ;
- soit des tâches non programmées, telles que la prise en compte d'une modification tardive de la charge, la planification d'un déroutement imprévu ou l'établissement d'un bilan à la suite d'une panne d'un système de l'aéronef par exemple.

On sait que l'équipage d'un aéronef, en particulier d'un avion de transport civil, a actuellement une grande quantité d'informations à sa disposition. Malheureusement, ces informations sont le plus souvent dispersées dans plusieurs documents (recueils, classeurs, ...) ou systèmes et il est parfois difficile à l'équipage de trouver parmi ces différentes sources d'informations, dans le délai imparti, une information recherchée.

On sait de plus que pour prendre une décision en vue de l'exécution d'une tâche particulière, l'équipage a généralement besoin de rassembler au plus vite un certain nombre de données précises et à jour, relatives à cette tâche, avant d'en faire une synthèse pour se former une opinion sur la situation réelle. Toutefois, la recherche dans des recueils de données étant souvent longue et fastidieuse, l'équipage devant le plus souvent interroger différents systèmes et/ou consulter divers classeurs de documentation, ..., il s'ensuit que le temps et la charge de travail nécessaires à ces opérations sont parfois incompatibles avec les contraintes temporelles auxquelles est confronté l'équipage, que ce soit au sol en liaison avec un créneau de décollage par exemple, ou en vol.

Les inconvénients de cet état de fait sont multiples. Dans de nombreux cas, cela conduit l'équipage à prendre sous la pression du temps des décisions non optimales, sans attendre et connaître les données précises correspondantes. Dans d'autres cas où l'équipage ne peut se passer de telles données, cela peut le conduire à manquer son créneau horaire, notamment de décollage, et entraîne donc des retards. Toutes ces conséquences négatives sont bien entendu génératrices de pertes pour la compagnie aérienne correspondante.

Par ailleurs, par le document US-5 475 594, on connaît un dispositif d'assistance documentaire embarqué, comprenant :
- des sources de données informatiques réalisées sous formes de bases de données ;
- des moyens d'interrogation et de présentation d'informations ; et
- une unité centrale qui est reliée aux éléments précédents, qui recherche dans les bases de données des données relatives à l'exécution d'une tâche, qui rassemble ces données et les transmet à un moyen de présentation d'informations en vue de leur présentation à un opérateur.

Ce dispositif connu présente toutefois de nombreux inconvénients. En particulier :
- uniquement les informations enregistrées dans les bases de données sont accessibles, de sorte que ce dispositif n'est pas totalement fiable ; et
- la présentation d'informations est difficilement lisible et compréhensible, en raison notamment de la somme d'informations d'intérêts variés, qui est disponible.

La présente invention a pour objet de remédier à ces inconvénients. Elle concerne un dispositif d'assistance documentaire d'au moins un opérateur d'un aéronef, en particulier un pilote de l'aéronef, pour assister ledit opérateur dans l'exécution d'au moins l'une d'une pluralité de tâches différentes.

A cet effet, selon l'invention, ledit dispositif d'assistance documentaire d'au moins un opérateur d'un aéronef, en particulier un pilote de l'aéronef, pour assister ledit opérateur dans l'exécution sur l'aéronef d'au moins l'une d'une pluralité de tâches différentes, ledit dispositif d'assistance documentaire étant embarqué sur ledit aéronef et comportant :
- une pluralité de sources de données informatiques comportant au moins des données relatives audit aéronef, à des éléments de ce dernier, ainsi qu'à l'environnement extérieur ;
- un moyen d'interrogation activable, servant d'interface entre ledit opérateur et ledit dispositif d'assistance documentaire et susceptible d'être activé par ledit opérateur pour engendrer une demande d'informations relatives à l'exécution d'au moins l'une desdites tâches ;
- un moyen de présentation d'informations ; et
- une unité centrale reliée auxdites sources de données, audit moyen d'interrogation et audit moyen de présentation d'informations et susceptible de rechercher dans lesdites sources de données, en réponse à la génération d'une demande d'informations par ledit moyen d'interrogation, des données relatives à l'exécution de la tâche correspondante, de rassembler les données ainsi recherchées et de les transmettre, sous forme d'informations, audit moyen de présentation d'informations en vue de leur présentation à l'opérateur,
est remarquable en ce que lesdites sources de données informatiques comprennent des systèmes existant sur l'aéronef et associés à des éléments dudit aéronef, en ce que ladite unité centrale est susceptible de rechercher dans toutes lesdites sources de données informatiques toutes les données relatives à l'exécution d'une tâche et de les rassembler en une pluralité de groupes présentant des niveaux de détails différents, et en ce que ledit moyen de présentation d'informations présente à l'opérateur au moins l'un de ces niveaux, ledit opérateur pouvant sélectionner par l'intermédiaire dudit moyen d'interrogation les autres niveaux pour faire afficher le niveau qu'il désire consulter.

Ainsi, grâce à l'invention, on présente à l'opérateur (de façon automatique et rapide) toutes les informations relatives à la tâche qu'il doit exécuter de sorte qu'il n'a pas à effectuer de recherches. Par conséquent, il peut prendre rapidement les décisions qu'il convient pour exécuter la tâche correspondante, tout en sachant qu'il a à sa disposition toutes les informations existantes et nécessaires, ce qui représente de plus un confort psychologique important.

En outre, comme les informations sont rassemblées de façon organisée avant d'être présentées, la lecture et la compréhension de ces informations sont simplifiées et la prise de décision est facilitée. De plus, le rassemblement des données en une pluralité de groupes présentant des niveaux de détails différents permet qu'une donnée synthétique (qui est par exemple suffisante pour un opérateur expérimenté) ne soit pas noyée au milieu de nombreux détails (qui sont par exemple nécessaires à un opérateur moins expérimenté pour bien cerner la situation et prendre une décision), tout en prévoyant un accès rapide et facile aux informations plus détaillées. L'opérateur peut ainsi choisir le niveau de détails qui lui convient le mieux.

On notera que, dans le cadre de la présente invention, lesdits systèmes existant sur l'aéronef sont associés à des éléments, tels que les moteurs, l'éclairage, les ailes, ... et sont surtout destinés à réaliser des fonctions particulières, telles que l'aide au pilotage, à la navigation ou au traitement d'une panne par exemple. Le dispositif conforme à l'invention a ainsi accès en temps réel à des informations relatives à des valeurs effectives qui sont disponibles sur l'aéronef et il est, de ce fait, particulièrement fiable.

Selon l'invention, lesdites sources de données informatiques comprennent également, de façon avantageuse, des bases de données qui peuvent :
- préexister sur l'aéronef ou être prévues spécifiquement pour la mise en oeuvre de la présente invention ;
- être indépendantes (comme par exemple la liste des aéroports de déroutement préférentiels d'une compagnie aérienne) ou être contenues dans un système (comme par exemple la base de données de navigation contenue dans le système de gestion de vol) ; et/ou
- être permanentes (comme la base de données précitée) ou être modifiables, en particulier par les systèmes de l'aéronef, notamment en cours de vol (comme par exemple la liste de contrôle pour l'approche en cas de panne d'un système).

Par ailleurs, avantageusement, le dispositif conforme à l'invention comporte, de plus, au moins un moyen de surveillance surveillant au moins un paramètre particulier, tel que le fuel ou la météo par exemple, et susceptible d'activer automatiquement ledit moyen d'interrogation pour engendrer une demande d'informations, en fonction des résultats de ladite surveillance.

En outre, dans un mode de réalisation particulier, ledit moyen d'interrogation et ledit moyen de présentation d'informations font partie d'une seule et même interface de dialogue comportant au moins un écran et un clavier. Dans ce cas, de préférence, ledit écran affiche au moins une zone de navigation destinée à la génération de demandes d'informations et à la sélection d'informations à présenter et une zone de travail destinée à la présentation des informations sélectionnées.

La présente invention concerne également un procédé d'assistance documentaire d'au moins un opérateur d'un aéronef, en particulier un pilote de l'aéronef, pour assister ledit opérateur dans l'exécution d'au moins l'une d'une pluralité de tâches différentes.

Selon l'invention, ledit procédé d'assistance documentaire selon lequel on engendre une demande d'informations relatives à l'exécution d'une tâche, et lorsqu'une telle demande est engendrée, on réalise, de façon successive et automatique, les opérations suivantes :
a) on recherche des données concernant l'exécution de ladite tâche dans une pluralité de sources de données informatiques comprenant au moins des données relatives audit aéronef, à des éléments de ce dernier, ainsi qu'à l'environnement extérieur ;
b) on rassemble les données ainsi recherchées ; et
c) on présente audit opérateur, par l'intermédiaire d'un moyen de présentation d'informations, des informations associées à au moins certaines des données ainsi rassemblées,
est remarquable en ce qu'à l'étape a), on recherche, dans toutes lesdites sources de données informatiques qui comprennent des systèmes existant sur l'aéronef et associés à des éléments dudit aéronef, toutes les données relatives à l'exécution de ladite tâche, en ce qu'à l'étape b), on rassemble les données selon plusieurs niveaux de détails, et en ce qu'à l'étape c), on présente à l'opérateur au moins l'un de ces niveaux, ledit opérateur pouvant sélectionner les autres niveaux pour faire afficher le niveau qu'il désire consulter.

De préférence, on présente à l'opérateur, suite à la recherche de données, au moins certaines des informations suivantes :
- les données elles-mêmes ;
- l'endroit où se trouvent les données ;
- le résultat d'un traitement réalisé à partir des données ; et
- une proposition de calcul à partir des données.

De façon avantageuse, lesdites sources de données comportent au moins certaines des données suivantes :
- des données bibliographiques ;
- des données évolutives ;
- des données issues de systèmes de l'aéronef ; et
- des données proposant des actions à entreprendre.

En outre, de façon avantageuse, pour faciliter la sélection des informations à présenter, on affiche une liste arborescente permettant d'accéder aux différentes informations disponibles.

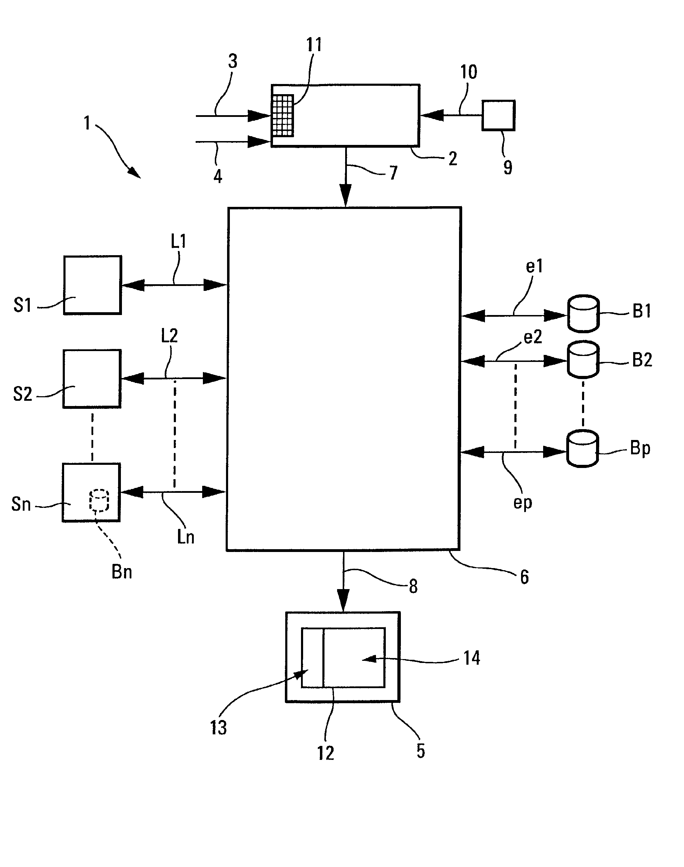

L'unique figure du dessin annexé fera bien comprendre comment l'invention peut être réalisée. Elle représente un schéma synoptique d'un dispositif d'assistance documentaire conforme à l'invention.

Le dispositif 1 qui est embarqué sur un aéronef et qui est, de préférence, au moins partiellement agencé dans le poste de pilotage de l'aéronef, est destiné à l'assistance documentaire d'au moins un opérateur, par exemple un pilote, ou même de tout l'équipage dudit aéronef, en particulier un avion de transport civil, pour assister ledit opérateur ou ledit équipage dans l'exécution d'au moins l'une d'une pluralité de tâches différentes. Il peut s'agir de tâches programmées ou non, qui doivent être accomplies avant, pendant ou après le vol.

Selon l'invention, ledit dispositif 1 comporte :
- une pluralité de sources de données informatiques S1 à Sn, B1 à Bp, précisées ci-dessous et comportant au moins des données relatives audit aéronef, à des éléments (moteurs, train d'atterrissage, ...) de ce dernier, ainsi qu'à l'environnement extérieur (météo, piste d'atterrissage, ...) ;
- un moyen d'interrogation 2 activable, servant d'interface entre ledit opérateur non représenté et ledit dispositif d'assistance documentaire 1 et susceptible d'être activé par ledit opérateur, comme illustré par des flèches 3 et 4, pour engendrer une demande d'informations relatives à l'exécution d'au moins l'une desdites tâches ;
- un moyen de présentation d'informations 5 ; et
- une unité centrale 6 qui est reliée :
   · par l'intermédiaire de liaisons L1 à Ln et e1 à ep, à double sens, respectivement auxdites sources de données S1 à Sn et B1 à Bp ; et
   · par l'intermédiaire de liaisons 7 et 8 respectivement audit moyen d'interrogation 2 et audit moyen de présentation d'informations 5.

Ladite unité centrale 6 est susceptible de rechercher dans lesdites sources de données S1 à Sn et B1 à Bp, en réponse à la génération d'une demande d'informations par ledit moyen d'interrogation 2, des données relatives à l'exécution de la tâche correspondante, de rassembler les données ainsi recherchées et de les transmettre, sous forme d'informations, audit moyen de présentation d'informations 5 en vue de leur présentation audit opérateur, comme précisé ci-dessous.

Selon l'invention, lesdites sources de données informatiques (c'est-à-dire mettant en oeuvre un traitement automatique et rationnel de l'information) sont :
- des bases de données B1 à Bp, p étant un entier supérieur à 1, qui peuvent :
   . préexister sur l'aéronef ou être prévues spécifiquement pour la mise en oeuvre de la présente invention ;
   . être indépendantes (comme par exemple la liste des aéroports de déroutement préférentiels d'une compagnie aérienne) ou être contenues dans un système (comme par exemple la base de données de navigation du système de gestion de vol FMS ["Flight Management System" en anglais]) ;
   . être permanentes (comme la base de données de navigation précitée) ou être modifiables, en particulier par les systèmes de l'aéronef, notamment en cours de vol (comme par exemple la liste de contrôle pour l'approche en cas de panne d'un système) ; et/ou
- des systèmes S1 à Sn, n étant un entier supérieur à 1, qui existent sur l'aéronef et qui sont associés à des éléments, tels que les moteurs, l'éclairage, les ailes, ... de l'aéronef. Ces systèmes sont soit intégrés dans ces éléments, soit externes à ces derniers, et sont par exemple susceptibles de mesurer des paramètres relatifs auxdits éléments (tel que le régime d'un moteur par exemple). Ces systèmes sont surtout destinés à réaliser des fonctions particulières, telles que l'aide au pilotage, à la navigation ou au traitement d'une panne par exemple.

Certaines bases de données peuvent également être intégrées directement dans certains de ces systèmes S1 à Sn, comme illustré pour une base Bn sur la figure.

Ainsi, selon l'invention, lesdites sources de données S1 à Sn, B1 à Bp comportent au moins certaines des données suivantes :
- des données bibliographiques ;
- des données évolutives ;
- des données issues de systèmes de l'aéronef, tels que notamment le système de gestion de vol FMS ; et
- des données proposant des actions à entreprendre.

En outre, le moyen d'interrogation 2 comporte un clavier 11, par l'intermédiaire duquel l'opérateur peut dialoguer avec le dispositif 1, comme illustré par la flèche 3. Ledit moyen d'interrogation 2 peut également comporter d'autres éléments connus non représentés, en particulier une souris d'ordinateur, un désignateur, une boule de commande ou un écran tactile, pour permettre un tel dialogue, comme illustré par la flèche 4.

Un dialogue de ce type peut consister bien entendu, en ce qui concerne l'opérateur, à engendrer des demandes d'informations, mais pas uniquement. L'opérateur peut également utiliser le clavier 11 et les autres moyens mis à sa disposition pour sélectionner des informations à afficher ou entrer des données, en particulier afin de réaliser des calculs, comme on le verra plus en détail ci-dessous.

Le dispositif 1 comporte de plus au moins un moyen de surveillance 9, de type usuel, qui surveille un paramètre de l'aéronef, de l'un de ses éléments (moteurs, éclairage, ...) ou de l'environnement, tel que le fuel ou la météo par exemple. Ce moyen de surveillance 9 est susceptible d'activer automatiquement le moyen d'interrogation 2 par l'intermédiaire d'une liaison 10, notamment pour engendrer une demande d'informations, en fonction de ladite surveillance et en particulier en cas de panne ou de perturbation du fonctionnement de l'élément surveillé.

Après la recherche de toutes les données relatives à une tâche particulière, qui a été demandée par l'intermédiaire du moyen d'interrogation 2 automatiquement ou suite à une action de l'opérateur, l'unité centrale 6 rassemble et organise ces données, puis les transmet au moyen de présentation d'informations 5 pour que ce dernier les présente à l'opérateur.

Selon l'invention, l'unité centrale 6 peut organiser les données de diverses manières. Il est ainsi possible qu'elle rassemble lesdites données en une pluralité de groupes présentant des niveaux de détails différents. Elle peut toutefois également regrouper les données par thèmes tels que les données météo, les limitations, ...

L'organisation des informations est réalisée pour faciliter la lecture et la compréhension des informations qui sont présentées à l'opérateur. On choisit, de préférence, une organisation qui permet d'adapter l'assistance documentaire apportée par le dispositif 1, facilement et rapidement, au niveau de connaissances de l'opérateur (connaissances générales, connaissances du contexte opérationnel, ...) et/ou à son besoin d'informations à l'instant considéré.

Pour réaliser la présentation d'informations, le moyen 5 comporte au moins un écran 12 permettant d'afficher lesdites informations. Bien entendu, ledit moyen 5 peut également comprendre d'autres moyens connus, par exemple une imprimante ou un générateur de signal vocal, permettant de présenter des informations.

Pour améliorer la présentation d'informations et augmenter la compréhension de diverses informations, ledit écran 12 affiche au moins une zone de navigation 13 destinée à la génération des demandes d'informations et à la sélection des informations à présenter (qui ont été préalablement rassemblées en différents groupes) et au moins une zone de travail 14 destinée à la présentation des informations sélectionnées.

Dans un autre mode de réalisation non représenté, on utilise des boutons de commande organisés en menus et sous-menus. Cela permet de hiérarchiser les fonctions, mais dans ce cas l'ensemble de ces fonctions n'est pas visible. En contrepartie, une telle interface permet de disposer d'une plus grande surface pour l'affichage des fonctions. De plus, on peut dans ce cas lancer plusieurs fonctions simultanément du fait des capacités de multifenêtrage. Cela permet, par exemple, de gérer efficacement les interruptions qui peuvent survenir dans un poste de pilotage (deux tâches peuvent en effet se dérouler simultanément : lorsque le pilote est en train d'initialiser les systèmes, le chef avion peut lui demander par exemple d'évaluer de plus un changement de masse).

En outre, pour faciliter la sélection des informations dans l'exemple représenté sur la figure, le moyen 5 affiche au niveau de la zone de navigation 13 une liste arborescente permettant d'accéder aux différentes informations disponibles. Le principe de la sélection dans une liste arborescente est bien connu : les informations sont organisées en dossiers (qui s'ouvrent par exemple par un clic de souris ou par une sélection par le clavier 11, suivie par la pression d'une touche particulière), ce qui permet de sélectionner la page désirée, celle-ci s'affichant alors dans la zone de travail 14.

En particulier, pour favoriser l'accès direct et intuitif aux diverses informations, le dispositif 1 peut comporter différents moyens technologiques connus et non représentés, tels que :
- des liens hypertextes pour l'accès à une information disponible sur un thème donné, dans le contexte opérationnel du vol considéré ;
- des moyens pour faciliter l'accès à des applications existant déjà dans certains systèmes ;
- des moyens permettant l'accès à des données issues de différents systèmes sans obligation de changer d'interface ; et
- des bases de données communes pour minimiser la recopie de données et assurer une cohérence entre les hypothèses de calcul des différentes applications.

Dans un mode de réalisation particulier non représenté, le moyen d'interrogation 2 et le moyen de présentation d'informations 5 peuvent faire partie d'une seule et même interface d'interrogation, qui est de préférence montée dans le poste de pilotage et qui comporte un clavier 11 et un écran 12.

En résumé, à partir des différentes données recherchées par l'unité centrale 6, le moyen 5 présente au moins certaines des informations suivantes :
- les données elles-mêmes ; et/ou
- l'endroit où se trouvent ces données ; et/ou
- le résultat d'un traitement réalisé à partir desdites données ; et/ou
- une proposition de calcul à partir desdites données.

Lorsque cela est possible, on s'attachera à fournir à l'équipage les données nécessaires à la visualisation du "domaine opérationnel" en privilégiant les représentations graphiques qui donnent une bonne idée de la tendance de variation, sans pour autant négliger l'aspect numérique qui permet d'obtenir la valeur précise de la donnée, tout en tenant compte du contexte opérationnel de la mission (limitations et marges à respecter, plan de vol et limitations dues aux pannes des systèmes).

Par ailleurs, pour faciliter la tâche de l'opérateur ou de l'équipage de l'aéronef, le dispositif 1 peut mettre à sa disposition des outils de calcul qui lui évitent autant que possible des traitements manuels longs et potentiellement source d'erreurs (par exemple en remplaçant le parcours des nombreuses courbes de performances au décollage par une application de calcul). Cela signifie que l'équipage se trouve alors dans la situation d'un traitement effectué en partie par un système. Pour permettre la vérification des données initiales, on donnera à l'équipage la possibilité d'accéder à l'ensemble des hypothèses de calcul prises en compte par le système pour effectuer son traitement et on facilitera leur analyse par une organisation logique consistant à regrouper les données par thèmes (par exemple : données météo, limitations, ...).

On peut également prévoir un mode de consultation évolué pour la documentation disponible à bord de l'aéronef, selon lequel mode, en fonction du contexte opérationnel (phase de vol, ...), le dispositif 1 propose un accès qui va pointer sur les sections appropriées (panne hydraulique, ...) parmi tous les documents disponibles.

Par ailleurs, afin de favoriser une utilisation optimale et intuitive du dispositif 1, on apportera un soin particulier au guidage de l'opérateur tout au long de son parcours des fonctions du dispositif 1. Cela peut se traduire par une indication des actions à effectuer dans le processus normal d'utilisation du dispositif 1, comme relancer le calcul après des modifications des données d'entrée, transférer les résultats vers certains systèmes pour prendre en compte des modifications prévues, ... On peut également inclure dans le guidage le prépositionnement d'un curseur sur un champ suivant à remplir (le déplacement du curseur doit cependant rester prédictible), ainsi que des moyens d'aide comme des info-bulles ou une aide en ligne.

Le dispositif 1 permet également l'accès à une documentation électronique embarquée. On prévoit à cet effet deux modes principaux d'utilisation de cette documentation : un mode habituel et un mode contextuel. Le mode habituel correspond à l'utilisation normale d'une documentation avec certains avantages liés à sa forme électronique (recherche plus rapide, par mots-clés notamment, ou bien encore dans plusieurs volumes lorsque l'on ignore la localisation précise de l'information, liens hypertextes pour la navigation, etc ...). Le mode contextuel profite du fait que le dispositif 1 est informé du contexte opérationnel pour prépositionner la documentation. Dans le module de gestion de panne par exemple, on présentera en priorité la page "FCOM" relative à une panne particulière détectée, de même la liste des équipements indispensables au vol (MEL : "Minimum Equipment list") affichera en priorité les objets concernés par cette panne. A ces avantages en terme d'utilisation, s'ajoutent des possibilités de mises à jour simplifiées et plus rapides.

Par conséquent, le dispositif 1 conforme à l'invention fournit à l'opérateur un accès facile, rapide et intuitif aux informations (dont il a besoin pour exécuter une tâche : prendre une décision, apporter une réponse à un problème, ...) et uniquement à ces informations. Il permet de plus de décharger l'opérateur de tâches élémentaires nécessitant beaucoup de temps, en particulier en déléguant aux systèmes de l'aéronef les tâches qui demandent un nombre et une précision de calcul importants.

Ledit dispositif 1 n'est pas un système expert, mais c'est un système qui fournit toutes les informations dont l'opérateur a besoin pour prendre une décision afin d'exécuter une tâche particulière.

A titre d'illustration, au sol, le dispositif 1 peut prévenir l'équipage lorsqu'une donnée est modifiée, ce qui le libère en partie de sa tâche de surveillance et lui permet de mieux gérer les interruptions de la part des différents acteurs détenteurs de l'information. Le fait de fournir à l'équipage un accès centralisé à toutes les données lui permet de se construire une image mentale qui est une image fidèle du contexte opérationnel de la mission.

## Revendications

1. Dispositif d'assistance documentaire d'au moins un opérateur d'un aéronef, en particulier un pilote de l'aéronef, pour assister ledit opérateur dans l'exécution sur l'aéronef d'au moins l'une d'une pluralité de tâches différentes, ledit dispositif d'assistance documentaire (1) étant embarqué sur ledit aéronef et comportant :
- une pluralité de sources de données informatiques (S1 à Sn, B1 à Bp) comportant au moins des données relatives audit aéronef, à des éléments de ce dernier, ainsi qu'à l'environnement extérieur ;
- un moyen d'interrogation (2) activable, servant d'interface entre ledit opérateur et ledit dispositif d'assistance documentaire (1) et susceptible d'être activé par ledit opérateur pour engendrer une demande d'informations relatives à l'exécution d'au moins l'une desdites tâches ;
- un moyen de présentation d'informations (5) ; et
- une unité centrale (6) reliée auxdites sources de données (S1 à Sn, B1 à Bp), audit moyen d'interrogation (2) et audit moyen de présentation d'informations (5) et susceptible de rechercher dans lesdites sources de données (S1 à Sn, B1 à Bp), en réponse à la génération d'une demande d'informations par ledit moyen d'interrogation (2), des données relatives à l'exécution de la tâche correspondante, de rassembler les données ainsi recherchées et de les transmettre, sous forme d'informations, audit moyen de présentation d'informations (5) en vue de leur présentation à l'opérateur,
**caractérisé en ce que** lesdites sources de données informatiques comprennent des systèmes (S1 à Sn) existant sur l'aéronef et associés à des éléments dudit aéronef, **en ce que** ladite unité centrale (6) est susceptible de rechercher dans toutes lesdites sources de données informatiques (S1 à Sn, B1 à Bp) toutes les données relatives à l'exécution d'une tâche et de les rassembler en une pluralité de groupes présentant des niveaux de détails différents, et **en ce que** ledit moyen de présentation d'informations (5) présente à l'opérateur au moins l'un de ces niveaux, ledit opérateur pouvant sélectionner par l'intermédiaire dudit moyen d'interrogation (2) les autres niveaux pour faire afficher le niveau qu'il désire consulter.

2. Dispositif selon la revendication 1,
**caractérisé en ce que** lesdites sources de données informatiques comprennent des bases de données (B1 à Bp).

3. Dispositif selon l'une quelconque des revendications 1 et 2,
**caractérisé en ce qu'**il comporte, de plus, au moins un moyen de surveillance (9) surveillant au moins un paramètre particulier et susceptible d'activer automatiquement ledit moyen d'interrogation (2) pour engendrer une demande d'informations, en fonction des résultats de ladite surveillance.

4. Dispositif selon l'une quelconque des revendications 1 à 3,
**caractérisé en ce que** ledit moyen d'interrogation (2) et ledit moyen de présentation d'informations (5) font partie d'une seule et même interface de dialogue comportant au moins un écran (12) et un clavier (11).

5. Dispositif selon la revendication 4,
**caractérisé en ce que** ledit écran (12) affiche au moins une zone de navigation (13) destinée à la génération de demandes d'informations et à la sélection d'informations à présenter et une zone de travail (14) destinée à la présentation des informations sélectionnées.

6. Procédé d'assistance documentaire d'au moins un opérateur d'un aéronef, en particulier un pilote de l'aéronef, pour assister ledit opérateur dans l'exécution sur ledit aéronef d'au moins l'une d'une pluralité de tâches différentes, procédé selon lequel on engendre une demande d'informations relatives à l'exécution d'une tâche, et lorsqu'une telle demande est engendrée, on réalise, de façon successive et automatique, les opérations suivantes :
a) on recherche des données concernant l'exécution de ladite tâche dans une pluralité de sources de données informatiques (S1 à Sn, B1 à Bp) comprenant au moins des données relatives audit aéronef, à des éléments de ce dernier, ainsi qu'à l'environnement extérieur ;
b) on rassemble les données ainsi recherchées ; et
c) on présente audit opérateur, par l'intermédiaire d'un moyen de présentation d'informations (5), des informations associées à au moins certaines des données ainsi rassemblées,
**caractérisé en ce qu'**à l'étape a), on recherche, dans toutes lesdites sources de données informatiques (S1 à Sn, B1 à Bp) qui comprennent des systèmes (S1 à Sn) existant sur l'aéronef et associés à des éléments dudit aéronef, toutes les données relatives à l'exécution de ladite tâche, **en ce qu'**à l'étape b), on rassemble les données selon plusieurs niveaux de détails, et **en ce qu'**à l'étape c), on présente à l'opérateur au moins l'un de ces niveaux, ledit opérateur pouvant sélectionner les autres niveaux pour faire afficher le niveau qu'il désire consulter.

7. Procédé selon la revendication 6,
**caractérisé en ce que** ladite demande d'informations est engendrée par une action de l'opérateur.

8. Procédé selon l'une des revendications 6 ou 7,
**caractérisé en ce que** ladite demande d'informations est engendrée automatiquement, en fonction du résultat de la surveillance d'un paramètre.

9. Procédé selon l'une quelconque des revendications 6 à 8,
**caractérisé en ce que** lesdites sources de données informatiques (S1 à Sn, B1 à Bp) comportent au moins certaines des données suivantes :
- des données bibliographiques ;
- des données évolutives ;
- des données issues de systèmes de l'aéronef ; et
- des données proposant des actions à entreprendre.

10. Procédé selon l'une quelconque des revendications 6 à 9,
**caractérisé en ce qu'**à l'étape c), on présente à l'opérateur, suite à la recherche de données, au moins certaines des informations suivantes :
- les données elles-mêmes ;
- l'endroit où se trouvent les données ;
- le résultat d'un traitement réalisé à partir des données ; et
- une proposition de calcul à partir des données.

11. Procédé selon l'une quelconque des revendications 6 à 10,
**caractérisé en ce que** l'on affiche une liste arborescente permettant d'accéder aux différentes informations disponibles.
